# EUROPEAN PATENT APPLICATION

(11) **EP 1 347 398 A1**
(43) Date of publication of application: **24.09.2003**
(21) Application number: 01272897.8
(22) Date of filing: 27.12.2001
(51) Int. Cl.: G06F 17/60

(54) **CONTEST ARTICLE EVALUATION METHOD**

(30) Priority: 28.12.2000 JP 2000402794
(71) Applicant: Toneaki, Yasunobu, Yamaguchi-shi, Yamaguchi 735-0023 (JP)
(72) Inventor: Toneaki, Yasunobu, Yamaguchi-shi, Yamaguchi 735-0023 (JP)
(74) Representative: Wagner, Karl H., Dipl.-Ing.
(86) International application number: JP0111544
(87) International publication number: WO02054311

(57) **Abstract**

A method of judging entries for a contest is provided for judging a large number of the entries easily and fairly. The method comprises the steps of registering each entry of a contestant; selecting a predetermined number of entries from the entries of the contestants and requesting another contestant to j udge the predetermined number of the entries ; registering the entry of the another contestant; and ranking the entries judged by the contestants.

## Description

### Technical Field

The present invention relates to a method of judging entries for a contest, e.g., over a network such as the Internet.

### Background Art

It is common for a contest that all entries, for example, paintings, photos, illustrations, architectural plans, music scores, and other creations, are judged by the judges appointed by the sponsor to award prizes in the contest. Such a method of judgment is easily feasible only when the number of entries is small. However, if the number of entries is as large as over ten thousands, the judgment method will be conducted with much difficulty.

As the Internet has widely been popularized, it may be used as an Internet network for entering a contest. In that case, the number of entries is enormously increased to, for example, hundreds thousands or more, as the contest is open to the Internet users of all the world. As a result, the above conventional judgment method will hardly be performed over the Internet. It is hence desired for every contest accessible over the Internet to handle and judge a large number of entries fairly and simply.

It is an object of the present invention to provide a method of judging a large number of entries fairly and simply for any of contests.

### Disclosure of the Invention

A method of judging entries for a contest according to the present invention is provided comprising the steps of: registering each entry of a contestant; selecting a predetermined number of entries from the entries of the contestants and requesting another contestant to judge the predetermined number of the entries; registering the entry of the another contestant; and ranking the entries judged by the contestants.

The method of the present invention allows the entries for the contest to be registered and then delivered to each contestant, e.g., as a group of five to seven entries which are judged by the contestant for determining rankings. On condition that the contestant is assigned to act as a judge, its entry for the contest is accepted and registered as a competitor for the prize. The entry of each contestant can be judged by any succeeding contestant who entries the contest after that. Since the entry of each contestant is judged by the other contestants, it can easily be ranked. Also, as the contestant is requested to judge the entries of the other contestants before its entry is accepted, its action for the entry and the judgment can be done at higher efficiency. Because the entries are ranked by the judgment of the contestants, their evaluation can be fair to some degree. Moreover, when some, namely 100 to 200, of the entries which have passed the primary judgment are assigned as the primarily awarded entries and subjected to the secondary judgment by specialists or professionals, their evaluation can much be fair and efficient. As the number of entries is increased, they can be judged at two, primary and secondary, or more steps to narrow down to a few awarded entries with a degree of the fairness. The contest judged by the method of the present invention may be intended for awarding music scores such as ringer melodies, paintings, photographs, cartoons, illustrations, writings, architectural plans, ideas, short stories, songs (word and music), playing performances, and other creations.

### Brief Description of the Drawings

Fig. 1 is a schematic view of a judging system for performing the method of judging entries according to the present invention;
Figs. 2(a) to 2(c) are views showing displayed items on the screen of a mobile telephone;
Fig. 3 is a diagram explaining the relation between contestants and subjects to be judged; and
Fig. 4 is a flowchart schematically showing steps of the method of the present invention for a contest.

### Best Modes for embodying the Invention

A method of judging entries for a contest according to the present invention will be described in more detail referring to the accompanying drawings. The contest in this description is intended for awarding the ringing tone melodies of mobile telephones (referred to as ringermelodies hereinafter).

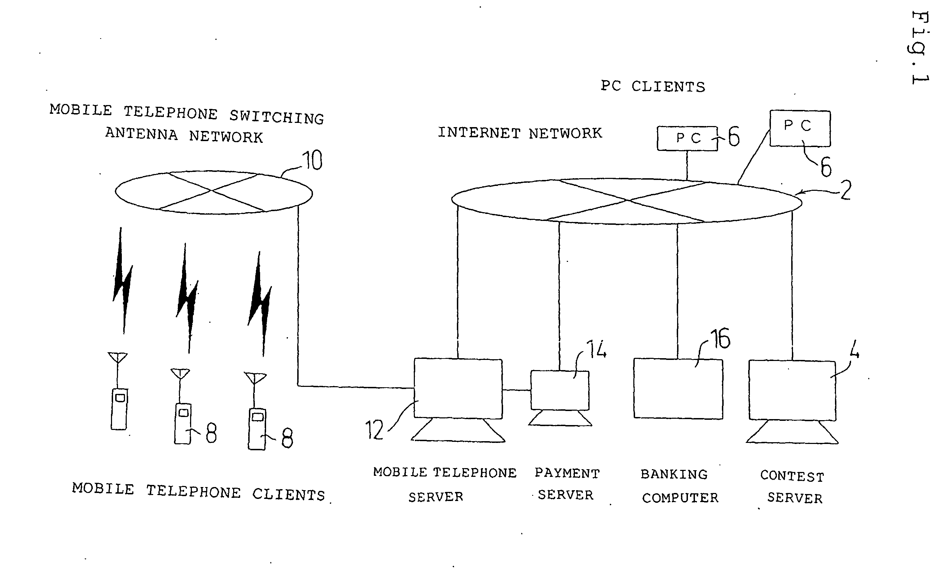

Figs. 1 to 4 illustrate a judging system for judging entries of the ringer melodies for the contest. As shown in Fig. 1, the judging system includes a contest server 4 linked to a known Internet network 2. The contest server 4 is owned by a sponsor of the contest, for example, an advertising agent or a ringer melody provider. The contest server 4 is linked to personal computers 6A to 6N of clients (PC clients) who enroll as the contestants by the Internet network 2 for two-way communications and also to mobile telephones 8A to 8N of the clients (telephone clients) preferably. The mobile telephones 8A to 8N are arranged accessible to the contest server 4 via a mobile telephone switching antenna network 10, a mobile telephone server 12, and the Internet network 2 for two-way communications . The PC clients 6A to 6N and the mobile telephones 8A to 8N serve as contest entering means.

The Internet network 2 is also linked with a payment server 14 and a computer 16 in a banking firm. In case the contest fee is necessary for entering the contest, the contestants have to submit contest applications with the contest fee through entering their relevant data including the ID number, the bank account number, and the total of fee from their personal computers 6A to 6N or mobile telephones 8A to 8N. The data is then transmitted via the Internet network 2 to the payment server 14 which in turn carries out the following procedure. More specifically, the payment server 14 asks the computer 16 in the banking firm via the Internet network 2 for the creditability of each contestant and when receiving a reply indicating that the contestant is eligible, directs a bank where the contestant has its account to pay the fee for the contest. The amount of money for the fee is then drawn from the account of the contestant and transferred to the sponsor of the contest.

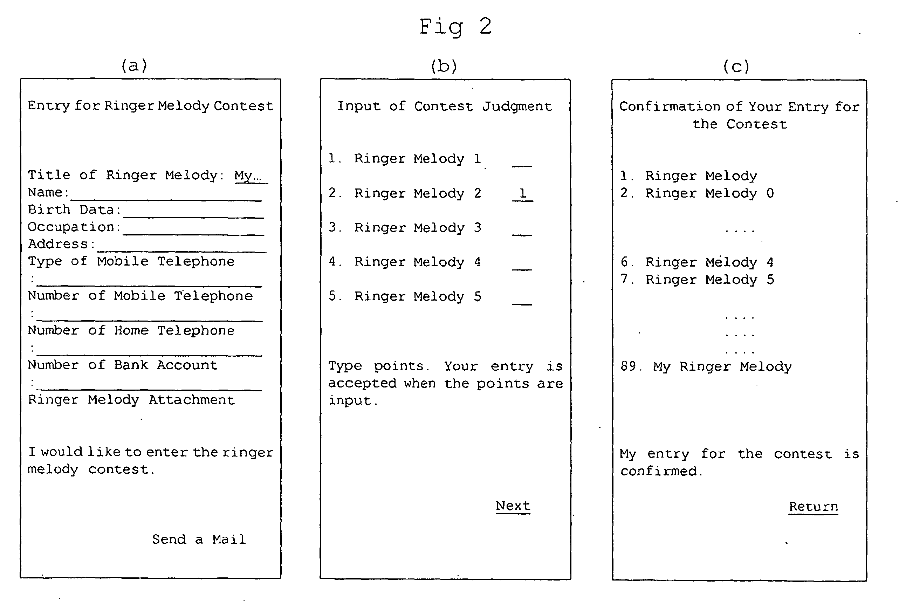

A procedure of entering the contest will be explained as followed by the method of judging the entries, referring to Figs. 1 and 2.

In the procedure, the entry for the contest is conducted from the mobile telephone 8, although it can be made from the personal computer 6. It is essential that any entering means has a function of two-way communications.

The procedure starts with the contestant dispatching its created ringer melody along with the relevant entry data, e.g. in the form of an E mail, to the contest server 4 for the contest. The E mail including the created ringer melody is transmitted from the mobile telephone 8 of the contestant via the mobile telephone switching antenna network 10, the mobile telephone server 12, and the Internet network 2 to the contest server 4. For example, Fig. 2 (a) illustrates a display on the screen of the mobile telephone 8 for dispatching the entry including the title of the created ringer melody and, if desired, the name, birth, and occupation of the contestant. The entry is accompanied with the created ringer melody data. Moreover, when the entry fee is needed, the account number for payment shall be added.

Upon receiving the entry of the Email from the contestant, the contest server 4 temporarily registers and saves its contestant data and the created ringer melody in a memory means 26 provided therein. After the temporary registration, the contest server 4 picks up a predetermined number (preferably 2 to 10, five in this embodiment) of the other ringer melodies from the memory means 26 which have officially been registered and delivers them to the contestant. As a result, the ringer melodies of the other contestants are partially displayed on the screen of the mobile telephone 8 of the contestant. The number of the other ringer melodies to be delivered from the contest server 4 for judgment by each contestant is determined by a judgment number setting means 18. Fig. 2 (b) illustrates an example of the five ringer melodies displayed on the screen of the mobile telephone 8 of the contestant after received from the contest server 4. In this example, the title and the number of each ringer melody to be judged are displayed.

In addition to the judgment number setting means 18, the contest server 4 includes a number comparing means 20 for selectively determining the number of the other ringer melodies to be received and displayed on the mobile telephones 8 of the contestants depending on the total number of the entries. The action of the means involves calculating the total number of entries and, when the total number exceeds a given level, determining how many preliminary contests have to carried out and how many entries have to be received by the mobile telephone 8 of each contestant in consideration of, e.g., the total number of the entries and the time of decision for awarding the entries. When the total number of the entries is not greater than the given level, the contest will be started directly with the final stage without having preliminary stages.

The judgment number setting means 18 can increase or decrease the number of the other ringer melodies to be delivered to each entry means, for example mobile telephone 8. For example, when some pieces of information are given including the total number of entries and the total duration required before the final decision is made, they may be used for an automatic reverse action of determining the number of ringer melodies to be delivered to each entry means. This allows the judgment number setting means 18 to set the number of ringer melodies to be judged to a range from 2 to 10. It is generally supposed that if the number of ringer melodies to be judged is greater than 10, the result of the judgment will hardly be adequate. Yet, the number of ringer melodies to be judged by each contestant can be set to greater than 10 if desired. The number comparing means 20 may preferably be designed for detecting discrepancies between the judgments and examining whether or not the judgment has to be repeated.

Upon receiving the predetermined number, e.g. five, of the ringer melodies of the other contestants, the contestant examines and judges them with scores which are then received by the contest server 4. The judgment may be made by each contestant assigned with one vote and giving its vote to the most favorable ringer melody. For example, the display shown in Fig. 2(b) illustrates the entry two is awarded with one vote. Alternatively, the most favorable ringer melody may be awarded with three points while the second favorable ringer melody is awarded with one point. Moreover, the judgment may be made by ranking all the five ringer melodies from the first awarded with five points to the fifth awarded with one point. This type of the judgment method may also be modified.

In this embodiment, the predetermined number (namely five) of the ringer melodies to be judged are not officially registered by the contest server 4 before the first to fifth entries are received. As the above described judgment is hence unfeasible, the contest server 4 can without any condition officially register five of the initial entries with their contestant data and melody data. Each of the sixth and more entries are then requested by the contest server 4, where five or more of the other ringer melodies have been received and registered, for judging any set of the (namely five) other ringer melodies. The set of the other ringer melodies to be judged may be selected on the first come first served basis. More specifically, the sixth contestant receives the ringer melodies of the first to fifth entries, the seventh (the eighth, the ninth, ...) contestant receives the ringer melodies of the second (the third, the fourth, ...) to sixth (the seventh, the eighth, ...) entries, and so on. The created ringer melody of each entry can thus be judged by the other contestants and its most favorable one is awarded with five points of the maximum.

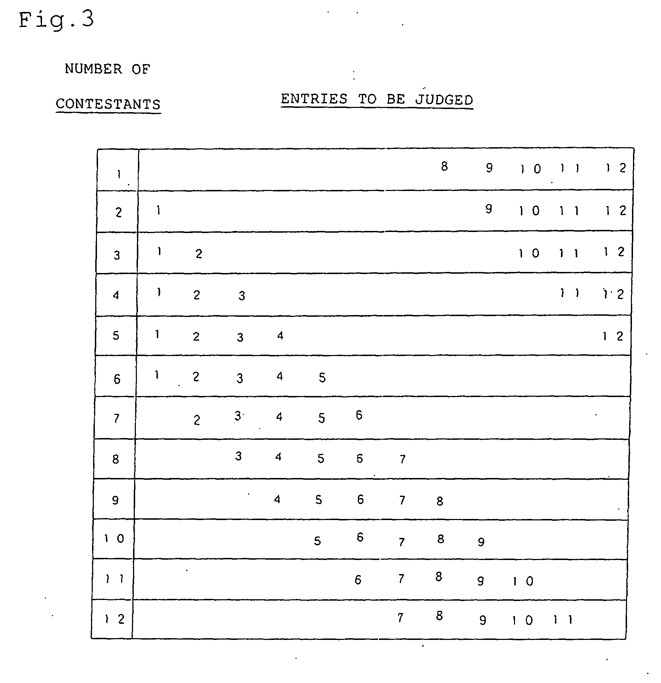

However, as apparent from the description, the method fails to permit the initial five contestants to judge the other entries and the final five entries, of which the contestants are allowed to judge the other entries, to be fairly judged by the other contestants. For elimination of the above drawback, a modification of the method is proposed as shown in Fig. 3. The modification is explained in more detail referring to Fig. 3. When it is confirmed that the number of entries is twelve, the sixth contestant is assigned to judge the ringer melodies of the first to fifth entries and the seventh contestant is assigned to judge the ringer melodies of the second to sixth entries. Similarly, the last, twelfth contestant is assigned to judge the ringer melodies of the seventh to eleventh entries. Also, while the first contestant is assigned to judge the ringer melodies of the eighth to twelfth entries, the second contestant is assigned to judge the ringer melodies of the ninth to twelfth entries and the first entry and the third contestant is assigned to judge the ringer melodies of the tenth to twelfth entries and the first and second entries. Similarly, the fifth contestant is assigned to judge the ringer melodies of the twelfth entry and the first to fourth entries. In this manner, each contestant is assigned to judge the ringer melodies of any five other contestants. When the number of entries is increased to 10,000 or 100, 000, the same manner can be used for the judgment. In any case, the first to fifth contestants receive the ringer melodies of the other entries to be judged only when the total number of the entries has been confirmed.

The result of each judgment is then transferred to the contest server 4. The contest server 4 includes a judgment determining means 22. The judgment determining means 22 in the contest server 4 receives, saves, and sums the points of the judgment from the contestants to determine the rank. The entry for the contest is officially accepted on the condition that its contestant judges the ringer melodies of other contestants and delivers the result of the judgment to the contest server 4. In turn, the contestant data and its ringer melody data which have temporarily been registered are formally registered and the ringer melody is treated as an entry to be judged in the contest server 4. The contestant then receives a notice of entry acceptance from the contest server 4 which indicates that its entry is officially accepted as is displayed in the screen of its mobile telephone 8 such as shown in Fig. 2 (c). For example, the entry number assigned to the ringer melody created by the contestant is displayed. When the entry fee is required upon the formal registration, the contestant starts a procedure for paying the entry fee.

Since the judgment of the ringer melodies of the other contestants is mandatory to each contestant who wants to enter the contest, the ringer melody of each entry is judged by the other contestants. Accordingly, the entry for the contest can significantly be encouraged and, even if the number of entries is increased, the ringer melody of each contestant can be judged easily, readily, and, to some degree, fairly. This may be explained by most of the contestants having degrees of knowledge of the ringer music and participating as those who skilled in the art.

The j udgment of the ringer melody of each entry is carried out by the above manner. At the final stage of the judgment, the ringer melodies of all the contestants are ranked by the points. The ringer melodies are ranked by their points, for example, five points for the highest and ranked down, to determine the first prize, the second prize, and so on. Alternatively, at the final stage, the ringer melodies awarded with, for example, five points (and also four points) may be grouped as a top rank (for example, ten entries being selectively grouped) and then judged by professionals of the ringer music. This allows a large number of the entries to be judged efficiently and fairly.

The method of this embodiment involves a single process of the judgment. However, when the number of entries for the contest is too large, their ringer melodies may be subjected to a first-stage judgment. Then, the ringer melodies passed on the first-stage judgment may be judged at the second-stage. Alternatively, the ringer melodies passed on the second-stage judgment may be subjected to a third- stage judgment. The second-stage judgment following the first-stage judgment can be conducted by the following manner. At the first-stage judgment, a given number of the ringer melodies of the other entries are judged by each contestant who is formally registered as an entry for the contest on the condition that it judges the ringer melodies of the other contestants. As the ringer melodies are ranked by the first-stage criteria, their higher entries are passed as the first-stage judgment passed ringer melodies. After the first-stage judgment, the contestants of the passed ringer melodies are informed via the Internet network 2 and the antenna network 10 that their entries are passed on the first-stage judgment and moved to the second-stage judgment. As a similar procedure as of the first-stage judgment is carried out for the second-stage judgment, a given number of the first-stage judgment passed ringer melodies are judged by each contestant who is formally registered as a first-stage judgment passed entry for the contest on the condition that it judges the ringer melodies of the other first-stage judgment passed contestants. As the ringer melodies are ranked by the second-stage criteria, their highest entry or the final stage entries are determined. In this manner, a large number of the entries can be judged efficiently and fairly.

For example, when the number of entries is 100,000, the ringer melodies passed on the first-stage judgment (e.g. 2,000 entries) have to be subjected to the second stage judgment to narrow down the entries judged at the final stage. In the same manner as mentioned above, each five of the 2, 000 ringer melodies passed on the first-stage judgment are then secondarily judged by each contestant of which the ringer melody has passed the first-stage judgment. At the second-stage judgment, the contestants of which the ringer melodies fail to pass the first-stage judgment are not allowed to participate the judgment. By repeating this procedure, the third, fourth, or higher stage judgments are conducted to fairly determine a group of the final entries (e.g. ten ringer melodies) which are then judged by professionals of the ringer music at the final stage.

For conducting the second, third, fourth, or higher stage judgments, the contest server 4 of this embodiment further includes a selecting means 24 for automatically notifying the selected or passed contestants of the entry into a further stage judgment after the registration in the judgment determining means 22. When the number of the finally passed ringer melodies determined by the judgment determining means 22 is greater than the number of the final stage entries (e.g. ten), the selecting means 24 selects and contacts the contestants for participating the second, third, or higher stage judgment. Results of the second-stage judgment are then received and summed by the judgment determining means 22 for determining the second-stage judgment passed entries. Similarly, results of the third-stage judgment are then received and summed by the judgment determining means 22 for determining the third-stage judgment passed entries. The selecting means 24 has a further function for notifying awarded ones of the contestants of the entry into the final stage judgment.

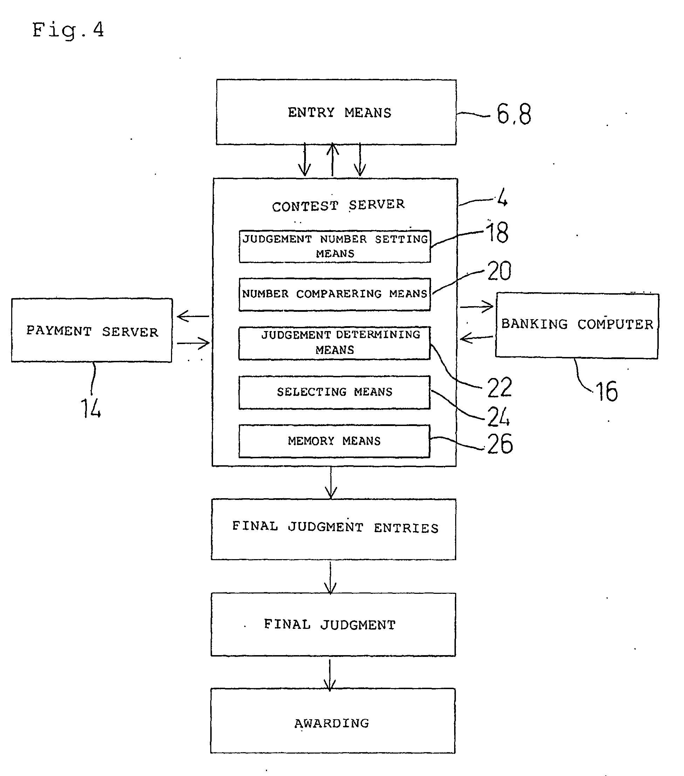

The present invention allows each contestant to enter the contest through accessing the contest server 4 from its entering means such as the personal computer 6 or the mobile telephone 8 as illustrated in Fig. 4. Upon identifying and directing the contestant for carrying out a pre-entering procedure through the payment server 14 and the banking computer 16, the contest server 4 drives its judgment number determining means 18 to determine the number of ringer melodies to be delivered to each entry means or mobile telephone 8 from a variety of factors including the total number of entries and the duration required for determining the final winner. This setting of the number may be conducted manually or automatically depending on those factors. In turn, the contestant judges a group of the ringer melodies of the other contestants and supplies the contest server 4 with its judgment points. The judgment points are saved in the memory means 26 of the contest server 4 . The judgment determining means 22 in the contest server 4 then analyzes the judgment points of each contestant to determine the awarded ringer melodies. Then, the contestants of which the ringer melodies are awarded are identified by the selecting means 24 in the contest server 4 and, if desired, they are further subjected to a higher-stage judgment. As the judgment has been repeated, a final group of the awarded entries are selected. The final group of the awarded entries are then subjected to the final stage by professionals of the ringer music to determine the winner of the ringer melodies. Using this method, the contest can be performed worldwide over the Internet network. Even if the number of entries for the contest is 100,000 or more, they can be judged readily and fairly. Also, as its final stage judgment is conducted by professionals of the ringer music, the contest can be kept fair and minimized in the duration of time.

It would be understood that the present invention is not limited to the embodiment described above for judging entries for a contest but other changes and modifications may be made without departing the scope of the present invention.

### Industrial applications

Even if the number of entries for a contest is increased, the method of judging the entries for the contest according to the present invention can allow the entries to be judged easily, efficiently, and fairly by using a network such as the Internet.

## Claims

1. A method of judging entries for a contest comprising the steps of:
registering each entry of a contestant;
selecting a predetermined number of entries from the entries of the contestants and requesting another contestant to judge the predetermined number of the entries;
registering the entry of the another contestant; and
ranking the entries judged by the contestants.

2. A method of judging entries for a contest having a first judging step of primarily judging the entries for the contest and a second judging step of secondarily judging the entries which have passed the first judging step, wherein
the first judging step comprises sub steps of: primarily registering the entry of each contestant; selecting a predetermined number of entries from the entries of the contestants and requesting another contestant to primarily judge the predetermined number of the entries; registering the entry of the another contestant as a primary contestant; and primarily ranking the entries judged by the contestants,
the second judging step comprises sub steps of: secondarily registering the entry of each contestant which has passed the first judging step; selecting a predetermined number of entries from the first judging step passed entries for the second judgment and requesting each of the contestants of which the entry has passed the first judging step to secondarily judge the predetermined number of the first judging step passed entries; registering the entry of each of the contestants as a first judging step passed entry; and secondarily ranking the first judging step passed entries judged by the contestants, and
there is provided an extra step between the first judging step and the second judging step for notifying the contestants of which the entries have passed the first judging step of the entry for the second judging step of the contest.

3. A method of selecting a predetermined number of entries from a number of entries for a contest comprising the steps of:
having each contestant provided with an entry means for entry for the contest;
having a contest sponsor provided with a contest server;
allowing the entry means and the contest server to be connected to each other for two-way communications over the Internet network;
having the contest server arranged comprising a memory means and a judgment determining means; and
allowing the entries to be once saved in the memory means and then judged by the judgment determining means for fairly selecting a predetermined number of winners from all the entries.

4. A method of judging entries for a contest comprising the steps of:
having each contestant provided with an entry means for entry for the contest;
having a contest sponsor provided with a contest server;
allowing the entry means and the contest server to be connected to each other for two-way communications over a network such as the Internet network;
having the contest server arranged comprising a memory means, a judgment number setting means, a number comparing means, a judgment determining means, and a selecting means,
allowing the memory means to save all the entries for the contest;
allowing the judgment number setting means and the number comparing means to calculate the total number of the entries and, when the total number is greater than a specific level, determine and deliver a proper number of the entries to be judged by each contestant to the entry means of the contestant;
allowing the contestant to judge a winner (s) from the entries of the other contestants;
allowing the entry means to return its judgment result to the contest server;
allowing the memory means in the contest server to save the judgment result;
allowing the number comparing means to examine whether or not the number of the saved entries is greater than a predetermined level;
allowing each of the contestants to repeat the judgment until the number of the saved entries in the memory means is not greater than the predetermined level;
selecting a group of winners from the saved entries when the number of the saved entries in the memory means is not greater than the predetermined level and assigning them as the entries for the final judgment.

5. A method of judging entries for a contest according to claim 3 or 4, wherein the entry means is a computer or a mobile telephone.

6. A method of judging entries for a contest according to any of claims 3 to 5, wherein the selecting means do not select the entries other than saved in the memory means while the judgment by the contestants is being repeated.

7. A method of judging entries for a contest according to any of claims 1 to 6, wherein the contest is intended to award paintings, photographs, illustrations, architectural drawings, music works, or any other creations over the Internet network.
